# EUROPÄISCHE PATENTSCHRIFT

(11) **EP 1 910 721 B1**
(45) Veröffentlichungstag und Bekanntmachung des Hinweises auf die Patenterteilung: **28.01.2009**
(21) Anmeldenummer: 06777969.4
(22) Anmeldetag: 25.07.2006
(51) Int. Cl.: F16K 11/10, F16K 11/14

(54) **3-WEGEVENTIL**
3-PORT DIRECTIONAL CONTROL VALVE
SOUPAPE A TROIS VOIES

(30) Priorität: 01.08.2005 DE 102005036059
(43) Veröffentlichungstag der Anmeldung: 16.04.2008
(73) Patentinhaber: SIEMENS AKTIENGESELLSCHAFT, 80333 München (DE)
(72) Erfinder: MEINHOF, Andre-Heinrich, 76287 Rheinstetten (DE)
(86) Internationale Anmeldenummer: PCT/EP2006/064650
(87) Internationale Veröffentlichungsnummer: WO 2007/014883

(56) Entgegenhaltungen:
- DE-A1- 3 741 854
- DE-U1- 8 713 904
- GB-A- 1 010 721

## Beschreibung

Die Erfindung betrifft ein 3-Wegeventil nach dem Oberbegriff des Anspruchs 1 mit einer ersten Ventilkammer, einer zweiten Ventilkammer und einer dritten Ventilkammer, wobei zwischen der ersten Ventilkammer und der zweiten Ventilkammer eine erste Fluidpassage vorhanden ist, welche mittels eines ersten verstellbaren Ventilkörpers verschließbar ist, und zwischen der zweiten Ventilkammer und der dritten Ventilkammer eine zweite Fluidpassage vorhanden ist, welche mittels eines zweiten verstellbaren Ventilkörpers verschließbar ist.

Ein derartiges 3-Wegeventil ist beispielsweise aus der DE 8713904U1 oder der DE 42 01 442 A1 bekannt. Bei dem bekannten 3-Wegeventil sind zwei Ventilkörper auf einem in axialer Richtung verstellbaren, stabförmigen Schieber angeordnet. Mittels des Schiebers können die Ventilkörper in einen Ventilsitz gebracht werden, wodurch eine betreffende Fluidpassage geschlossen ist. Die Ventilkörper beziehungsweise die Ventilsitze sind so angeordnet, dass bei einer Verstellung des Schiebers jeweils ein Ventilkörper in Richtung seines zugehörigen Ventilsitzes bewegt wird und der andere Ventilkörper von seinem zugehörigen Ventilsitz wegbewegt wird. Durch Verstellen des Schiebers in eine Richtung lässt sich somit die eine Fluidpassage öffnen, während die andere Fluidpassage geschlossen wird.

Die Ventilkörper sind federnd an dem Schieber befestigt. Hierdurch lässt sich erreichen, dass bei einer bestimmten Stellung des Schiebers beide Fluidpassagen geschlossen sind. Je nach Stellung des Schiebers sitzt somit der eine Ventilkörper, der andere Ventilkörper oder beide Ventilkörper in seinem betreffenden Ventilsitz beziehungsweise in ihren Ventilsitzen.

Nachteilig bei dem genannten Ventil ist es, dass die Ventilkörper auf von außen auf das Ventil einwirkenden Beschleunigungskräften unterschiedlich reagieren. So ist es beispielsweise möglich, dass durch eine auf das Ventil einwirkende Beschleunigungskraft der eine Ventilkörper in seinen Ventilsitz gedrückt wird und der andere Ventilkörper zumindest vorübergehend aus seinem Ventilsitz gehoben wird. Das heißt, der andere Ventilkörper sitzt zumindest vorübergehend nicht mehr dicht in seinem Ventilsitz. Ähnliches kann auch durch eine temperaturbedingte Längenänderung des Schiebers auftreten. Denn eine Längenänderung des Schiebers kann bewirken, dass der eine Ventilkörper sich in Richtung seines Ventilsitzes verstellt, wohingegen der andere Ventilkörper sich in Richtung aus seinem Ventilsitz heraus verstellt.

Aus der DE 8 713 904 U1 ist eine aus zwei 3-Wegeventilen zusammengesetzte Ventilanordnung bekannt, welche drei Ventilkammern hat. Zwischen der ersten und der zweiten Ventilkammer ist eine Fluidpassage vorhanden, die durch einen ersten Ventilkörper verschließbar ist. Ebenso ist zwischen der zweiten und der dritten Ventilkammer eine durch den zweiten Ventilkörper verschließbare Fluidpassage vorgesehen. Die beiden Ventilkörper sind an einem um wenigstens eine Drehachse drehbar gelagerten Betätigungselement angeordnet. Die Verstellbewegungen der Ventilkörper erfolgen gegenläufig.

Die Betätigungsstößel sind als ein in einer Bohrung geführter Kolben ausgebildet. Durch die Führung der Kolben in den Bohrungen kann eine gewisse Abdichtung der Ventilkammern erreicht werden. Des Weiteren weisen die Betätigungsstößel im Abstand zu ihrer Ventilsitzfläche eine entgegengesetzt angeordnete Ringfläche auf, die vom Belüftungsdruck beaufschlagbar ist. Die Ringfläche ist etwa 25 Prozent größer ausgebildet als die Ventilsitzfläche. Hierdurch ergibt sich eine resultierende Kraft in Schließrichtung des Ventils.

Aus der DE 1 140 417 B ist ein 3-Wegeventil bekannt, dessen Ventilkörper durch Federn in Schließrichtung belastet werden. Die Federn sind außerhalb der Ventilkammern angeordnet.

Des Weiteren ist aus der US 2,647,536 ein Wegeventil bekannt, bei dem zwei in einem Abstand voneinander angeordnete Ventilkörper parallel zueinander verlaufen. Beide Ventilkörper sind an einem Betätigungselement angeordnet, welches jeweils an den Enden der Ventilkörper angelenkt ist.

Darüber hinaus ist aus der DE 652105 C ein 3-Wegeventil bekannt, bei dem auf einer gemeinsamen Achse verstellbare Ventilkörper über eine Kulisse mit einem drehbaren Betätigungselement verbunden sind.

Weiterhin ist aus der DE 1 852 663 U ein 3-Wegeventil bekannt, bei dem die Ventilkörper ebenfalls auf einer gemeinsamen Achse verstellbar sind. Zur Betätigung der Ventilkörper ist eine Rolle vorgesehen, welche auf die Stößel der Ventilkörper drückt. Die der jeweiligen Druckkammer zugewandten Flächen der Stößel entsprechen den der jeweiligen Druckkammer zugewandten Flächen der Ventilkörper, wodurch die Ventile bezogen auf ihre Druckkammern druckausgeglichen sind.

Aus der US 1,486,304 ist eine aus zwei 3-Wegeventilen zusammengesetzte Ventilanordnung bekannt, welche zur Ansteuerung eines Zweikammer-Stellantriebs dient. Die Federn der Ventilkörper liegen außerhalb der Ventilkammern.

Aus der DE 101 09 206 A1 ist ein Mehrwegeventil bekannt, das durch zwei Kolben betätigt wird. Die beiden Ventilkörper sind durch eine Wippe gekoppelt.

Darüber hinaus ist aus der GB 1010721 ein Hubventil bekannt, bei welchem ein Trennelement als Membran ausgebildet ist.

Es ist Aufgabe der Erfindung, ein eingangs genanntes 3-Wegeventil derart auszubilden, dass es störungsunempfindlicher ist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein 3-Wegeventil zur Ansteuerung eines pneumatisch betätigbaren Zweikammer-Stellantriebs, mit einer ersten Ventilkammer, einer zweiten Ventilkammer und einer dritten Ventilkammer, wobei zwischen der ersten Ventilkammer und der zweiten Ventilkammer eine erste Fluidpassage vorhanden ist, welche mittels eines ersten verstellbaren Ventilkörpers verschließbar ist, und zwischen der zweiten Ventilkammer und der dritten Ventilkammer eine zweite Fluidpassage vorhanden ist, welche mittels eines zweiten verstellbaren Ventilkörpers verschließbar ist, wobei der erste Ventilkörper und der zweite Ventilkörper an einem um wenigstens eine Drehachse drehbar gelagerten Betätigungselement angeordnet sind, so dass die Verstellbewegungen der Ventilkörper gegenläufig erfolgen, dadurch gekennzeichnet, dass zwischen den Ventilkörpern und dem Betätigungselement eine Membran angeordnet ist, wobei die Wirk-Fläche der Membran zum Kräfteausgleich auf den Wirk-Querschnitt des jeweiligen Ventilkörpers abgestimmt ist.

Das erfindungsgemäße 3-Wegeventil eignet sich hervorragend als Hauptventil (Booster) für die Arbeitskammer eines elektropneumatischen Regelventils. So kann es beispielsweise zur direkten Ansteuerung eines pneumatisch betätigbaren 2-Kammer-Stellantriebs verwendet werden, wie er beispielsweise aus der EP 0 918 939 B1 bekannt ist.

Dadurch, dass der erste Ventilkörper und der zweite Ventilkörper an einem um eine Drehachse drehbar gelagerten Betätigungselement angeordnet sind, so dass die Verstellbewegungen der Ventilkörper gegenläufig erfolgen, lassen sich beide Ventilkörper in einem Abstand etwa parallel nebeneinander anordnen, wie dies bei einer besonderen Ausführungsform der Erfindung vorgesehen ist. Das heißt, beide Ventilkörper führen zum Öffnen oder Schließen ihrer Fluidpassagen eine Bewegung in derselben Richtung aus. Hierdurch wirken sich von außen auf das Ventil einwirkende Kräfte auf beide Ventilkörper in gleicher Weise aus.

Wirkt auf das 3-Wegeventil von außen eine Beschleunigungskraft ein, die eine solche Richtung hat, dass beide Ventilkörper aus ihrem Ventilsitz gehoben werden, so üben die Ventilkörper auf das drehbar gelagerte Betätigungselement jeweils eine in dieselbe Richtung wirkende Kraft aus. Diese Kräfte kompensieren sich. Es ist somit bei einer vorteilhaften Ausführungsform der Erfindung vorgesehen, dass die Drehachse zwischen dem ersten Ventilkörper und dem zweiten Ventilkörper liegt. Sofern die Drehachse in der Mitte zwischen den beiden Ventilkörpern liegt, heben sich die Kräfte sogar vollständig auf.

Ähnliches gilt auch für mechanische Toleranzen und Temperatureinflüsse. Diese haben nahezu keine Auswirkungen, da sie sich im Wesentlichen kompensieren. Denn, da gegebenenfalls vorhandene mechanische Änderungen auf beide Ventilkörper gleich wirken, ist der Einfluss auf das drehbar gelagerte Betätigungselement beidseits der Drehachse ebenfalls gleich, weshalb sich die Einflüsse kompensieren.

Statt einer Drehachse können aber auch zwei Drehachsen vorhanden sein, welche jeweils an der Stelle liegen, an der der betreffende Ventilkörper mit dem Betätigungselement verbunden ist. Hierdurch wird zwar über das Betätigungselement keine Kompensation von außen auf die Ventilkörper einwirkender Beschleunigungskräfte erreicht, jedoch erhält man stattdessen den Vorteil, dass nahezu jegliches mechanisches Spiel der Elemente zur Betätigung der Ventilkörper ausgeschaltet ist.

Sehr vorteilhaft bei dem erfindungsgemäßen 3-Wegeventil ist es, dass zwischen den Ventilkörpern und dem Betätigungselement eine Membran angeordnet ist. Durch die Membran wird in vorteilhafter Weise erreicht, dass sich das Betätigungselement außerhalb der Ventilkammern befindet. Dies ist sehr vorteilhaft, da das Betätigungselement hierdurch nicht mit dem durch das Ventil geleiteten Medium in Kontakt kommt, wodurch beispielsweise vermieden wird, dass das Betätigungselement korrodiert.

Des Weiteren ist es sehr vorteilhaft, dass die Wirk-Fläche der Membran auf den Wirk-Querschnitt des jeweiligen Ventilkörpers abgestimmt ist. Hierdurch wird erreicht, dass die Kraft, die auf die Ventilkörper aufgrund des in den Ventilkammern herrschenden Drucks ausgeübt wird, kompensiert, wird. Denn die auf die betreffende Membran wirkende Kraft wirkt in die entgegengesetzte Richtung als die auf den betreffenden Ventilkörper wirkende Kraft. Die Funktion der Ventilkörper beziehungsweise des Ventils wird daher durch den in den Ventilkammern herrschenden Druck nicht beeinträchtigt.

Als vorteilhaft hat sich auch eine Ausführungsform der Erfindung erwiesen, bei welcher Federelemente vorhanden sind, mittels welchen auf die Ventilkörper eine Kraft in Schließrichtung der Ventilkörper ausgeübt wird. Hierdurch ist eine zuverlässige Schließung der Fluidpassagen gewährleistet. Sehr vorteilhaft bei dieser Ausführungsform ist es, wenn die Federelemente durch ein Trennelement von den Ventilkammern getrennt sind. Durch das Trennelement, welches ebenfalls als Membran ausgebildet sein kann, wird erreicht, dass das betreffende Federelement nicht mit dem durch das Ventil geleiteten Medium in Kontakt kommt.

Des Weiteren wird durch die Trennelemente erreicht, dass die Ventilkammern einen Strömungsraum mit einer einfachen Geometrie bilden, da sich im Strömungsraum keine strömungsbehindernden Elemente befinden. Alle für die Steuerung des Ventils erforderlichen Funktionselemente befinden sich außerhalb des Strömungsraums, so dass sie leicht zugänglich sind und nicht vom Medienstrom beeinflusst werden.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

### Es zeigt

- Figur 1: eine schematische Darstellung einer ersten Ausfüh- rungsform eines erfindungsgemäß ausgebildeten 3- Wegeventils,
- Figur 2: eine schematische Darstellung einer zweiten Ausfüh- rungsform eines erfindungsgemäß ausgebildeten 3- Wegeventils, und
- Figur 3: eine schematische Darstellung einer dritten Ausfüh- rungsform eines erfindungsgemäß ausgebildeten 3- Wegeventils.

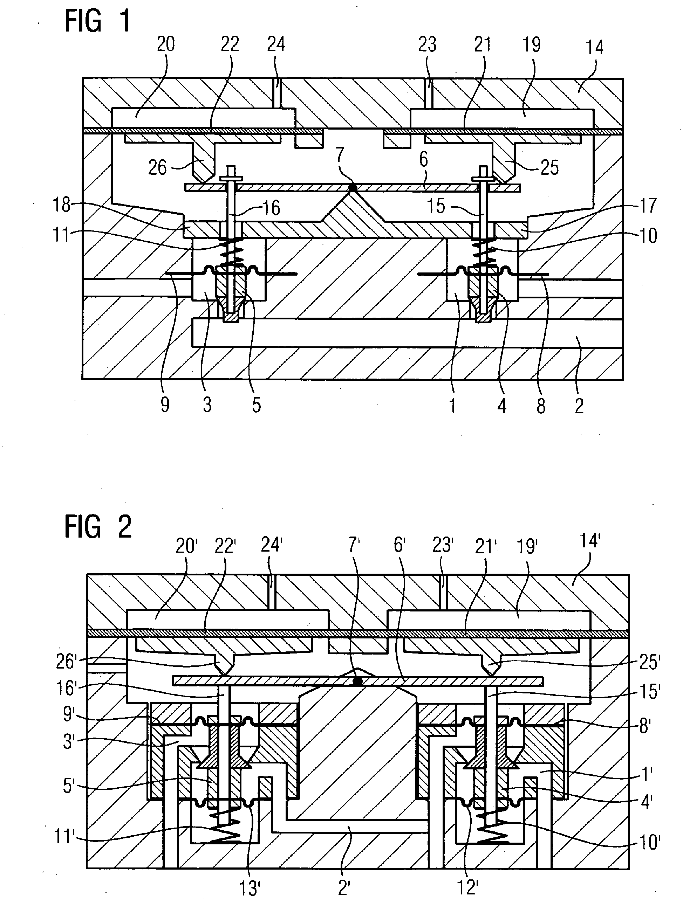

Wie Figur 1 entnommen werden kann, sind in einem Grundkörper 14 eine erste Ventilkammer 1, eine zweite Ventilkammer 2 und eine dritte Ventilkammer 3 angeordnet. Die Ventilkammern 1, 2, 3 haben jeweils eine aus dem Grundkörper 14 herausführende Zuleitung.

Die erste Ventilkammer 1 ist über eine erste Fluidpassage mit der zweiten Ventilkammer 2 verbunden. Die dritte Ventilkammer 3 ist über eine zweite Fluidpassage mit der zweiten Ventilkammer 2 verbunden. In der ersten Ventilkammer 1 ist ein erster, verstellbarer, im Wesentlichen zylinderförmig ausgebildeter Ventilkörper 4 angeordnet. Der erste Ventilkörper 4 ist axial verstellbar, so dass mittels ihm die erste Fluidpassage verschließbar ist. Hierzu hat die erste Fluidpassage einen ersten Ventilsitz, auf den der erste Ventilkörper 4 aufbringbar ist. Sitzt der erste Ventilkörper 4 in dem ersten Ventilsitz, ist die erste Fluidpassage geschlossen. Der Ventilsitz ist in herkömmlicher Weise ausgebildet, weshalb er in Figur 1 nicht gesondert dargestellt ist.

In gleicher Weise wie die erste Ventilkammer 1 ist in der dritten Ventilkammer 3 ein zweiter, im Wesentlichen zylinderförmig ausgebildeter Ventilkörper 5 angeordnet. Der zweite Ventilkörper 5 ist ebenfalls axial verstellbar, so dass mittels ihm die zweite Fluidpassage verschließbar ist. Hierzu weist die zweite Fluidpassage einen zweiten Ventilsitz auf, auf den der zweite Ventilkörper 5 aufbringbar ist. Sitzt der zweite Ventilkörper 5 in dem zweiten Ventilsitz, ist die zweite Fluidpassage geschlossen. Der zweite Ventilsitz ist ebenfalls in herkömmlicher Weise ausgebildet, so dass auch er in Figur 1 nicht gesondert dargestellt ist.

Der erste Ventilkörper 4 weist einen ersten Betätigungsstab 15 auf. Der zweite Ventilkörper 5 weist einen zweiten Betätigungsstab 16 auf. Der erste Betätigungsstab 15 sowie der zweite Betätigungsstab 16 sind an ihren den Ventilkörpern 4 bzw. 5 abgewandten Enden mit einem laschenförmig ausgebildeten Betätigungselement 6 verbunden. Das Betätigungselement 6 ist in seiner Mitte zwischen den Betätigungsstäben 15, 16 um eine Drehachse 7 drehbar gelagert. Hierdurch sind die Ventilkörper 4, 5 an einer zentrisch gelagerten Wippe angeordnet.

Die Verbindung der Betätigungsstäbe 15, 16 mit dem Betätigungselement 6 ist derart, dass bei einer Bewegung eines Arms des Betätigungselements 6 in Richtung von einem betreffenden Ventilkörper 4, 5 weg der betreffende Betätigungsstab 15, 16 beziehungsweise der betreffende Ventilkörper 4, 5 mitgenommen wird und bei einer Bewegung des Betätigungselements 6 in Richtung eines betreffenden Ventilkörpers 4, 5 der betreffende Betätigungsstab 15, 16 beziehungsweise der betreffende Ventilkörper 4, 5 nicht mitgenommen wird. Das heißt, bei einer Bewegung eines Arms des Betätigungselements 6 in Richtung eines Ventilkörpers 4, 5 gleitet der Arm des Betätigungselements 6 auf dem betreffenden Betätigungsstab 15, 16.

Durch die erste Ventilkammer 1 erstreckt sich eine ein Trennelement bildende erste Membran 8. Die erste Membran 8 ' schließt die erste Ventilkammer 1 dicht ab, wodurch das Betätigungselement 6 von der ersten Ventilkammer 1 getrennt ist. Der erste Ventilkörper 4 erstreckt sich durch die erste Membran 8, ist jedoch dicht mit der ersten Membran 8 verbunden.

An dem dem ersten Ventilsitz abgewandten Ende des ersten Ventilkörpers 4 ist außerhalb der ersten Ventilkammer 1 zwischen dem ersten Ventilkörper 4 und einem ersten Anschlagelement 17 des Grundkörpers 14 eine erste Druckfeder 10 angeordnet. Die erste Druckfeder 10 ist so dimensioniert, dass der erste Ventilkörper 4 bei waagerechter Stellung des Betätigungselements 6 mit einer leichten Kraft in den Ventilsitz gedrückt wird, so dass eine sichere Schließung der ersten Fluidpassage gewährleistet ist.

Durch die dritte Ventilkammer 3 erstreckt sich eine ein Trennelement bildende zweite Membran 9. Die zweite Membran 9 schließt die dritte Ventilkammer 3 dicht ab, wodurch sich das Betätigungselement außerhalb der dritten Ventilkammer befindet. Der zweite Ventilkörper 5 erstreckt sich durch die zweite Membran 9, ist jedoch dicht mit der zweiten Membran 9 verbunden.

An dem dem zweiten Ventilsitz abgewandten Ende des zweiten Ventilkörpers 5 ist außerhalb der dritten Ventilkammer 3 zwischen dem zweiten Ventilkörper 5 und einem zweiten Anschlagelement 18 des Grundkörpers 14 eine zweite Druckfeder 11 angeordnet. Die zweite Druckfeder 11 ist so dimensioniert, dass der zweite Ventilkörper 5 bei waagerechter Stellung des Betätigungselements 6 mit einer leichten Kraft in den Ventilsitz gedrückt wird, so dass eine sichere Schließung der zweiten Fluidpassage gewährleistet ist.

Da die erste Membran 8 die erste Ventilkammer 1 dicht abschließt, befindet sich die erste Druckfeder 8 außerhalb der ersten Ventilkammer 1. In gleicher Weise befindet sich die zweite Druckfeder 11 außerhalb der dritten Ventilkammer 3. Hierdurch kommen die Druckfedern 10, 11 nicht mit dem durch das Ventil geleiteten Medium in Berührung. Dies ist insbesondere bei einem aggressiven Medium sehr vorteilhaft.

Der Grundkörper 14 weist des Weiteren eine erste Druckkammer 19 und eine zweite Druckkammer 20 auf. Die erste Druckkammer 19 ist mittels einer dritten Membran 21 abgeschlossen und weist einen ersten Anschluss 23 auf. Die zweite Druckkammer 20 ist mittels einer vierten Membran 22 abgeschlossen und weist einen zweiten Anschluss 24 auf. An der der ersten Druckkammer 19 abgewandten Seite ist an der dritten Membran 21 ein erster Zapfen 25 angeordnet, welcher in Wirkverbindung mit dem Betätigungselement 6 steht. In gleicher Weise ist an der der zweiten Druckkammer 20 abgewandten Seite der vierten Membran 22 ein zweiter Zapfen 26 angeordnet, welcher in Wirkverbindung mit dem Betätigungselement 6 steht.

Wird über den ersten Anschluss 23 in der ersten Druckkammer 19 ein Druck erzeugt, wölbt sich die dritte Membran 21 nach außen, so dass sich der erste Zapfen 25 in Richtung des ersten Ventilkörpers 4 bewegt. Da der erste Betätigungsstab 15 in dieser Richtung nicht kraftschlüssig mit dem Betätigungselement 6 verbunden ist, das heißt, das Betätigungselement 6 auf dem ersten Betätigungsstab 15 gleitet, wird das Betätigungselement 6 an dieser Stelle ebenfalls in Richtung des ersten Ventilkörpers 4 bewegt.

Durch die Lagerung des Betätigungselements 6 in der Mitte zwischen dem ersten Ventilkörper 4 und dem zweiten Ventilkörper 5 wird das Betätigungselement 6 an der dem ersten Ventilkörper 4 gegenüber liegenden Seite vom zweiten Ventilkörper 5 weg bewegt. Hierdurch wird die vierte Membran 22 über den zweiten Zapfen 26 in die zweite Druckkammer 20 hineingewölbt. Ist der zweite Anschluss 24 geöffnet, baut sich in der zweiten Druckkammer 20 kein Druck und damit keine Gegenkraft auf.

Durch die Bewegung des Betätigungselements 6 in Richtung weg vom zweiten Ventilkörper 5, wird der zweite Ventilkörper 5 aus seinem Ventilsitz gehoben, wodurch die zweite Fluidpassage geöffnet ist. Hierdurch kann beispielsweise die dritte Ventilkammer 3 entlüftet werden.

Wird hingegen über den zweiten Anschluss 24 die zweite Druckkammer 20 mit Druck beaufschlagt, wölbt sich die vierte Membran 22 nach außen, so dass sich der zweite Zapfen 26 in Richtung des zweiten Ventilkörpers 5 bewegt. Da der zweite Betätigungsstab 16 in dieser Richtung nicht kraftschlüssig mit dem Betätigungselement 6 verbunden ist, das heißt, das Betätigungselement 6 auf dem zweiten Betätigungsstab 16 gleitet, wird das Betätigungselement 6 an dieser Stelle ebenfalls in Richtung des zweiten Ventilkörpers 5 bewegt.

Durch die Lagerung des Betätigungselements 6 in der Mitte zwischen dem ersten Ventilkörper 4 und dem zweiten Ventilkörper 5 wird das Betätigungselement 6 an der dem zweiten Ventilkörper 5 gegenüber liegenden Seite vom ersten Ventilkörper 4 wegbewegt. Hierdurch wird die dritte Membran 21 über den ersten Zapfen 25 in die erste Druckkammer 19 hineingewölbt. Ist der erste Anschluss 23 geöffnet, baut sich in der ersten Druckkammer 19 kein Druck und damit keine Gegenkraft auf.

Durch die Bewegung des Betätigungselements 6 in Richtung weg vom ersten Ventilkörper 4 wird der erste Ventilkörper 4 aus seinem Ventilsitz gehoben, wodurch die erste Fluidpassage geöffnet ist. Hierdurch kann beispielsweise ein in die erste Ventilkammer 1 geleitetes Medium in die zweite Ventilkammer 2 gelangen, wobei der Druck in der zweiten Ventilkammer 2 dem Druck in der ersten Ventilkammer 1 entspricht.

Die in Figur 2 dargestellte Ausführungsform eines erfindungsgemäß ausgebildeten 3-Wegeventils entspricht im Wesentlichen der in Figur 1 dargestellten Ausführungsform. Gleiche Elemente weisen daher dieselben Bezugszeichen auf; zur Unterscheidung sind sie jedoch mit einem Strich versehen.

Der wesentliche Unterschied der in Figur 2 dargestellten Ausführungsform zu der in Figur 1 dargestellten Ausführungsform besteht darin, dass durch eine Bewegung des Betätigungselements 6' in Richtung eines betreffenden Ventilkörpers 4', 5' der betreffenden Ventilkörper 4', 5' aus einem zugehörigen Ventilsitz gehoben wird, wodurch die betreffende Fluidpassage geöffnet wird. Hierdurch können die Betätigungsstäbe 15', 16' fest mit dem Betätigungselement verbunden sein.

Des Weiteren erstreckt sich durch die erste Druckkammer 1' eine ein Trennelement bildende fünfte Membran 12', die die erste Ventilkammer 1' dicht abschließt. Der erste Ventilkörper 4' erstreckt sich durch die fünfte Membran 12', ist jedoch dicht mit der fünften Membran 12' verbunden.

An dem dem ersten Ventilsitz abgewandten Ende des ersten Ventilkörpers 4' ist außerhalb der ersten Ventilkammer 1' zwischen dem ersten Ventilkörper 4' und dem Grundkörper 14' eine erste Druckfeder 10' angeordnet. Die erste Druckfeder 10' ist so dimensioniert, dass der erste Ventilkörper 4' bei waagerechter Stellung des Betätigungselements 6' mit einer leichten Kraft in den Ventilsitz gedrückt wird, so dass eine sichere Schließung der ersten Fluidpassage gewährleistet ist.

Weiterhin erstreckt sich durch die dritte Ventilkammer 3' eine ein Trennelement bildende sechste Membran 13', welche die dritte Ventilkammer 3' dicht abschließt. Der zweite Ventilkörper 5' erstreckt sich durch die sechste Membran 13', ist jedoch dicht mit der sechsten Membran 13' verbunden.

An dem dem ersten Ventilsitz abgewandten Ende des zweiten Ventilkörpers 5' ist außerhalb der dritten Ventilkammer 3' zwischen dem zweiten Ventilkörper 5' und dem Grundkörper 14' eine zweite Druckfeder 11' angeordnet. Die zweite Druckfeder 11' ist so dimensioniert, dass der zweite Ventilkörper 5' in waagerechter Stellung des Betätigungselements 6' mit einer leichten Kraft in den Ventilsitz gedrückt wird, so dass eine sichere Schließung der Fluidpassage gewährleistet ist.

Besonders vorteilhaft bei der in Figur 2 dargestellten Ausführungsform ist, dass die Wirk-Flächen der Trennelemente 8', 9', 12', 13' auf den Wirk-Querschnitt des jeweiligen Ventilkörpers 4', 5' abgestimmt sind. Das heißt beispielsweise für die erste Ventilkammer 1' und die betreffenden Elemente 4', 8'_{;} 9', 12', 13', dass die Kraft, die aufgrund des in der ersten Ventilkammer 1' herrschenden Drucks auf den ersten Ventilkörper 4' in Richtung des ersten Ventilsitzes wirkt, nahezu genauso groß ist, wie die Kraft, die aufgrund des in der ersten Ventilkammer 1' herrschenden Drucks auf die fünfte Membran 12' in Richtung vom ersten Ventilsitz weg wirkt. Mit anderen Worten, die für die Entstehung der Kraft in Richtung des Ventilsitzes für den Druck in der Ventilkammer 1' wirksame Fläche des Ventilkörpers 4' ist nahezu genauso groß, wie die für die Entstehung der Kraft in Richtung weg von dem Ventilsitz für den Druck in der Ventilkammer 1' wirksame Fläche der Membran 8'.

Dasselbe gilt auch für die zweite Ventilkammer 2' und die damit verbundenen Elemente sowie die dritte Ventilkammer 3' und die jeweils betreffenden Elemente.

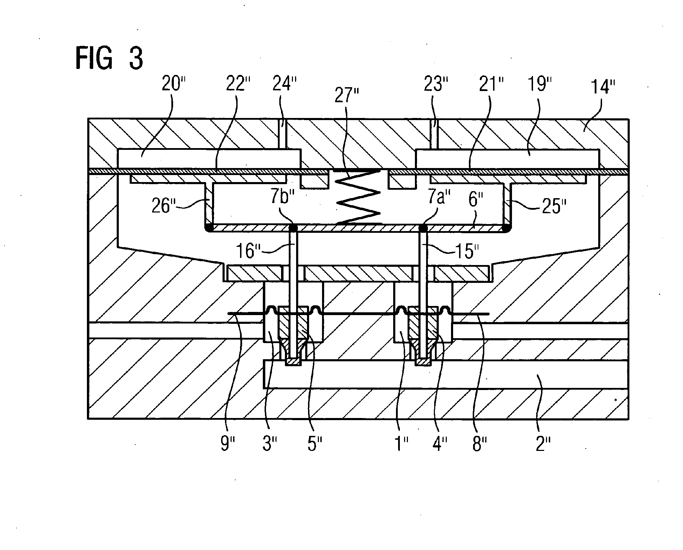

Die in Figur 3 dargestellte Ausführungsform eines erfindungsgemäß ausgebildeten 3-Wegeventils entspricht ebenfalls im Wesentlichen der in Figur 1 dargestellten Ausführungsform. Gleiche Elemente weisen daher dieselben Bezugszeichen auf; zur Unterscheidung sind sie jedoch mit zwei Strichen versehen.

Der wesentlichste Unterschied der in Figur 3 dargestellten Ausführungsform zu der in Figur 1 dargestellten Ausführungsform besteht darin, dass das Betätigungselement 6" nicht lediglich eine Drehachse aufweist sondern zwei Drehachsen 7a", 7b". Die Drehachsen 7a", 7b" befinden sich jeweils an der Verbindungsstelle des betreffenden Ventilkörpers 4" , 5" beziehungsweise des betreffenden Betätigungsstabs 15", 16" mit dem Betätigungselement 6" . Hierdurch wird in vorteilhafter Weise erreicht, dass nahezu jegliches Spiel der mechanischen Konstruktion eliminiert wird.

Wie Figur 3 entnommen werden kann, ist der erste Betätigungsstab 15" um die erste Drehachse 7a" drehbar mit dem Betätigungselement 6" verbunden. Der zweite Betätigungsstab 16" ist um die zweite Drehachse 7b" drehbar mit dem Betätigungselement 6" verbunden. Das Betätigungselement 6" ist in der Mitte zwischen den beiden Drehachsen 7a", 7b" über eine dritte Feder 27" mit dem Grundkörper 14" verbunden.

Wird über den ersten Anschluss 23" in der ersten Druckkammer 19" ein Druck erzeugt, wölbt sich die dritte Membran 21" nach außen, so dass sich der erste Zapfen 25" in Richtung des ersten Ventilkörpers 4" bewegt. Hierdurch wird das Betätigungselement 6" an der Stelle, an der der erste Zapfen 25" auf das Betätigungselement 6" trifft, ebenfalls in Richtung des ersten Ventilkörpers 4" bewegt.

Da der erste Ventilkörper 4" in seinem Ventilsitz sitzt, bewegt sich der erste Betätigungsstab 15" nicht nach unten, wodurch sich das Betätigungselement 6" um die erste Drehachse 7a" dreht. Das heißt, der zweite Betätigungsstab 16" beziehungsweise der zweite Ventilkörper 5" werden in Richtung weg vom zweiten Ventilsitz bewegt, wodurch die zweite Fluidpassage geöffnet wird.

Entsprechendes geschieht, wenn über den zweiten Anschluss 24" die zweite Druckkammer 20" mit Druck beaufschlagt wird. Dann wölbt sich die vierte Membran 22" nach außen, so dass sich der zweite Zapfen 26" in Richtung des zweiten Ventilkörpers 5" bewegt. Hierdurch wird das Betätigungselement 6" an der Stelle, an der der zweite Zapfen 26" auf das Betätigungselement 6" trifft, ebenfalls in Richtung des zweiten Ventilkörpers 5" bewegt.

Da der zweite Ventilkörper 5" in seinem Ventilsitz sitzt, bewegt sich der zweite Betätigungsstab 16" nicht nach unten, wodurch sich das Betätigungselement 6" um die zweite Drehachse 7b" dreht. Das heißt, der erste Betätigungsstab 15" beziehungsweise der erste Ventilkörper 4" werden in Richtung weg vom ersten Ventilsitz bewegt, wodurch die erste Fluidpassage geöffnet wird.

In der Mitte des Betätigungselements 6" ist zwischen dem Betätigungselement 6" und dem Grundkörper 14" die dritte Druckfeder 27" angeordnet. Die dritte Druckfeder 27" ist so dimensioniert, dass die beiden Ventilkörper 4" , 5" bei waagerechter Stellung des Betätigungselements 6" mit einer leichten Kraft in ihre Ventilsitze gedrückt werden, so dass eine sichere Schließung der Fluidpassagen gewährleistet ist.

## Patentansprüche

1. 3-Wegeventil zur Ansteuerung eines pneumatisch betätigbaren Zweikammer-Stellantriebs, mit einer ersten Ventilkammer (1; 1'; 1"), einer zweiten Ventilkammer (2; 2'; 2") und einer dritten Ventilkammer (3; 3'; 3"), wobei zwischen der ersten Ventilkammer (1; 1'; 1") und der zweiten Ventilkammer (2; 2'; 2") eine erste Fluidpassage vorhanden ist, welche mittels eines ersten verstellbaren Ventilkörpers (4; 4'; 4") verschließbar ist, und zwischen der zweiten Ventilkammer (2; 2'; 2") und der dritten Ventilkammer (3; 3' ; 3") eine zweite Fluidpassage vorhanden ist, welche mittels eines zweiten verstellbaren Ventilkörpers (5; 5'; 5") verschließbar ist, wobei der erste Ventilkörper (4; 4'; 4") und der zweite Ventilkörper (5; 5'; 5") an einem um wenigstens eine Drehachse (7; 7'; 7a", 7b") drehbar gelagerten Betätigungselement (6; 6'; 6") angeordnet sind, so dass die Verstellbewegungen der Ventilkörper (4, 5; 4', 5'; 4", 5") gegenläufig erfolgen, **dadurch gekennzeichnet, dass** zwischen den Ventilkörpern (4, 5; 4', 5' ; 4" , 5") und dem Betätigungselement (6; 6'; 6") eine Membran (8, 9; 8', 9'; 8", 9") angeordnet ist, wobei die Wirk-Fläche der Membran (8', 9') zum Kräfteausgleich auf den Wirk-Querschnitt des jeweiligen Ventilkörpers (4', 5') abgestimmt ist.

2. 3-Wegeventil nach Anspruch 1, **dadurch gekennzeichnet, dass** der zweite verstellbare Ventilkörper (5; 5'; 5" ) in einem Abstand zum ersten verstellbaren Ventilkörper (4; 4'; 4") derart angeordnet ist, dass die Verstellwege der Ventilkörper (4, 5; 4', 5'; 4", 5") parallel zueinander verlaufen.

3. 3-Wegeventil nach Anspruch 1 oder 2, **dadurch gekennzeichnet, dass** die Drehachse (7; 7') zwischen dem ersten Ventilkörper (4; 4') und dem zweiten Ventilkörper (5; 5') liegt.

4. 3-Wegeventil nach Anspruch 1 oder 2, **dadurch gekennzeichnet, dass** zwei Drehachsen (7a", 7b") vorhanden sind und die Drehachsen (7a", 7b") jeweils an der Verbindungsstelle des betreffenden Ventilkörpers (4" , 5") mit dem Betätigungselement (6") liegen.

5. 3-Wegeventil nach einem der Ansprüche 1 bis 4, **dadurch gekennzeichnet, dass** Federelemente (10, 11; 10', 11'; 27") vorhanden sind, mittels welchen auf die Ventilkörper (4, 5; 4', 5'; 4", 5") eine Kraft in Schließrichtung der Ventilkörper (4, 5; 4', 5'; 4", 5") ausgeübt wird, wobei die Federelemente (10, 11; 10', 11'; 27") durch ein Trennelement (8, 9; 12', 13'; 8", 9") von den Ventilkammern (1 , 2; 1', 2'; 1", 2") getrennt sind.

6. 3-Wegeventil nach Anspruch 5, **dadurch gekennzeichnet, dass** die Wirk-Fläche des Trennelements (12', 13') auf den Wirk-Querschnitt des jeweiligen Ventilkörpers (4', 5') abgestimmt ist.

## Claims

1. 3-port directional control valve for activation of a pneumatically-actuatable two-chamber actuator, with a first valve chamber (1; 1'; 1"), a second valve chamber (2; 2'; 2") and a third valve chamber (3; 3'; 3"), with a first fluid passage, which is able to be closed off by means of a first adjustable valve body (4; 4'; 4"), being present between the first valve chamber (1; 1'; 1") and the second valve chamber (2; 2'; 2"), and with a second fluid passage, which is able to be closed off by means of a second adjustable valve body (5; 5'; 5") being present between the second valve chamber (2; 2'; 2") and the third valve chamber (3; 3'; 3"), with the first valve body (4; 4'; 4") and the second valve body (5; 5'; 5") being arranged on an actuation element (6; 6'; 6") able to rotate around at least one axis of rotation (7; 7'; 7a", 7b"), so that the adjustment movements of the valve bodies (4, 5; 4', 5'; 4", 5") occur in opposing directions, **characterised in that**, between the valve bodies (4, 5; 4', 5'; 4", 5") and the actuation element (6; 6'; 6") is arranged a membrane (8, 9; 8', 9'; 8", 9"), with the effective surface of the membrane (8', 9') being tailored for equalization of the forces to the affective cross-section of the respective valve body (4', 5').

2. 3-port directional control valve according to claim 1, **characterized in that** the second adjustable valve body (5; 5'; 5") is arranged at a distance from the first adjustable valve body (4; 4'; 4") such that the adjustment paths of the valve bodies (4, 5; 4', 5'; 4", 5") run in parallel to each other.

3. 3-port directional control valve according to claim 1 or 2, **characterized in that** the axis of rotation (7; 7') lies between the first valve body (4; 4') and the second valve body (5; 5').

4. 3-port directional control valve according to claim 1 or 2, **characterized in that** there are two axes of rotation (7a", 7b") and the axes of rotation (7a" , 7b") lie at the connection point of the relevant valve body (4" , 5") and the actuation element (6") respectively.

5. 3-port directional control valve according to one of the claims 1 to 4, **characterized in that** spring elements (10, 11; 10', 11'; 27") are present, by means of which a force is exerted on the valve bodies (4, 5; 4', 5'; 4", 5") in the closing direction of the valve bodies (4, 5; 4', 5'; 4", 5"), with the spring elements (10, 11; 10', 11'; 27") being separated from the valve chambers (1, 2; 1', 2'; 1" , 2") by a separator element (8, 9; 12', 13'; 8", 9").

6. 3-port directional control valve according to claim 5, **characterized in that** the effective surface of the separator element (12', 13') is tailored to the effective cross section of the respective valve body (4', 5').

## Revendications

1. Soupape à trois voies de commande d'un servomoteur à deux chambres pouvant être actionné pneumatiquement, comprenant une première chambre (1 ; 1' ; 1") de soupape, une deuxième chambre ( 2 ; 2' ; 2") de soupape et une troisième chambre ( 3 ; 3' ; 3" ) de soupape, dans laquelle il y a, entre la première chambre ( 1 ; 1' ; 1" ) de soupape et la deuxième chambre ( 2 ; 2' ; 2" ) de soupape, un premier passage pour du fluide qui peut être fermé au moyen d'un premier obturateur ( 4 ; 4' ; 4" ) réglable et, entre la deuxième chambre ( 2 ; 2' ; 2" ) de soupape et la troisième chambre ( 3 ; 3' ; 3" ) de soupape, il y a un deuxième passage pour du fluide qui peut être fermé au moyen d'un deuxième obturateur ( 5 ; 5' ; 5" ) réglable, le premier obturateur ( 4 ; 4' ; 4" ) et le deuxième obturateur ( 5 ; 5' ; 5" ) étant montés sur un élément ( 6 ; 6' ; 6" ) d'actionnement monté tournant autour d'au moins un axe ( 7 ; 7' ; 7a", 7b" ) de rotation, de sorte que les mouvements de déplacement des obturateurs ( 4, 5 ; 4', 5' ; 4" , 5") s'effectuent en sens opposé, **caractérisée en ce qu'**entre les obturateurs ( 4, 5 ; 4', 5' ; 4" , 5" ) et l'élément ( 6 ; 6' ; 6") d'actionnement, est disposée une membrane ( 8, 9 ; 8', 9' ; 8", 9" ), la surface efficace de la membrane ( 8', 9' ) étant déterminée pour la compensation de la force sur la section transversale efficace de l'obturateur ( 4', 5' ) respectif.

2. Soupape à trois voies suivant la revendication 1, **caractérisée en ce que** le deuxième obturateur ( 5 ; 5' ; 5" ) réglable est disposé à une distance du premier obturateur ( 4 ; 4' ; 4" ) réglable, de façon à ce que les trajets de réglage des obturateurs ( 4, 5 ; 4', 5' ; 4", 5" ) soient parallèles entre eux.

3. Soupape à trois voies suivant la revendication 1 ou 2, **caractérisée en ce que** l'axe ( 7 ; 7' ) de rotation se trouve entre le premier obturateur ( 4 ; 4' ) et le deuxième obturateur ( 5 ; 5' ).

4. Soupape à trois voies suivant la revendication 1 ou 2, **caractérisée en ce qu'**il y a deux axes ( 7a", 7b" ) de rotation et les axes ( 7a", 7b" ) de rotation se trouvent respectivement au point de liaison de l'obturateur ( 4" , 5" ) concerné avec l'élément ( 6") d'actionnement.

5. Soupape à trois voies suivant l'une des revendications 1 à 4, **caractérisée en ce qu'**il y a des éléments ( 10, 11 ; 10', 11' ; 27" ) de ressort au moyen desquels une force dans le sens de fermeture des obturateurs ( 4, 5 ; 4', 5' ; 4", 5" ) est appliquée sur les obturateurs ( 4, 5 ; 4', 5' ; 4", 5"), les éléments ( 10, 11 ; 10', 11' ; 27" ) de ressort étant séparés des chambres ( 1, 2 ; 1', 2' ; 1", 2" ) par un élément ( 8, 9 ; 12', 13' ; 8", 9" ) de séparation.

6. Soupape à trois voies suivant la revendication 5, **caractérisée en ce que** la surface efficace de l'élément ( 12', 13' ) de séparation est adaptée à la section transversale efficace de l'obturateur ( 4', 5' ) respectif.
